# EUROPEAN PATENT SPECIFICATION

(11) **EP 1 405 207 B1**
(45) Date of publication and mention of the grant of the patent: **06.03.2013**
(21) Application number: 02754654.8
(22) Date of filing: 11.06.2002
(51) Int. Cl.: G06F 17/21, G06F 17/22, G06F 17/30

(54) **DEFINING LAYOUT FILES BY MARKUP LANGUAGE DOCUMENTS**
LAYOUTDATEIDEFINITION ANHAND VON AUSZEICHNUNGSPRACHEN-DOKUMENTEN
DEFINITION DE FICHIERS DE MISE EN PAGE PAR DOCUMENTS DE LANGAGE DE BALISAGE

(30) Priority: 05.07.2001 US 302659 P
(43) Date of publication of application: 07.04.2004
(73) Proprietor: SAP AG, 69190 Walldorf (DE)
(72) Inventor: WILLUMEIT, Heinz, 68789 St. Leon-Rot (DE); BISCHOF, Jörg, 69242 Mühlhausen (DE)
(74) Representative: Müller-Boré & Partner Patentanwälte
(86) International application number: PCT/EP2002/006388
(87) International publication number: WO 2003/005231

(56) References cited:
- ERIC VAN DER VLIST: "Style-free XSLT Style Sheets" XML.COM, [Online] 26 July 2000 (2000-07-26), XP002252708 Retrieved from the Internet: <URL:http://www.xml.com/pub/a/2000/07/26/x slt/xsltstyle.html> [retrieved on 2003-08-26]
- BERT BOS, HAKON WIUM LIE, CHRIS LILLEY, IAN JACOBS: "INTRODUCTION TO CSS2" CASCADING STYLE SHEETS, LEVEL 2 CSS2 SPECIFICATION. W3C RECOMMENDATION, [Online] 12 May 1998 (1998-05-12), pages 21-28, XP002252709 Retrieved from the Internet: <URL:http://www.w3.org/TR/1998/REC-CSS2-19 980512/> [retrieved on 2003-08-27] cited in the application

## Description

### Field of the Invention

The present invention generally relates to a computer-implemented method, a computer program product, an article of manufacture, and a computer system for providing layout files for HTML-pages.

### Background of the Invention

Companies or other organizations use predefined presentation layouts (a) for written documents such as letters, facsimile, or advertisement papers, as well as (b) for display presentations in electronic media such as in internet pages, intranet pages, television commercials, etc.

Each layout is defined, for example, by certain colors, by one or more logos, by a letter font size. The layouts are defined in layout files that are distributed throughout the organization. Changes in the layout have to be made in all files. It is not desired to leave some files out. For example, an organization that uses blue as the color of choice for its name, might get undesired attention from the general public if some of its presentations show the same name in red color.

However, customizing the presentation layout requires efforts; adapting the layout requires changing a plurality of items in the layout files.

It is desired to always use the right layout; there is an ongoing need to provide centralized layout management.

A paper by Eric van der Vlist entitled "Style-free XSLT Style Sheets" (and identified as being published on 26 July 2000, see http://www.xml.com/pub/a/2000/07/26/xslt/xsltstyle.html) describes a process in which presentation information is separated from logic information in an XSLT sheet by isolating a template in an XHTML document. In the XHTML document control elements are added that trigger templates in the style sheet. Thereafter, presentation and data is separated from an associated XML source document by obtaining an XML description of the layout for a particular page, separate from the description of the content. An embodiment is disclosed in which source.xml + logic.xslt + layout.xml (read by logic.xslt) → page.html.

In US 6,023,714 there is disclosed to dynamically adapt the layout of a document to a particular output device. Based on the capabilities of the output device, a style sheet defining the layout is selected or generated.

An IBM Research Disclosure, "Parameterized Style Sheets", XP002212821, (1/7/99), describes creating parameterized XSL stylesheets.

### Summary of the Invention

The present invention relates to a computer-implemented method according to claim 1.

In the step providing the markup language document, the document is provided in XML. It is an advantage of the present invention that the validity of the parameterized value applies for first and second entities, all changes to the parameterized value are automatically updated into the layout file.

The present invention also relates to a computer program product according to claim 2.

The present invention also relates to an article of manufacture according to claim 3.

The present invention also relates to a computer system according to claim 4.

### Brief Description of the Drawings

FIG. 1 illustrates a simplified block diagram of a computer network system having a plurality of computers;

FIG. 2 illustrates a simplified block diagram of a network system in that the present invention is applied;

FIG. 3 illustrates a group and a tray, each with a title in a first organization on a first computer;

FIG. 4 illustrates a group and a tray, each with a title in a second organization on a second computer;

FIG. 5 illustrates simplified block diagrams of a markup language document, a parser, and a layout file according to the present invention;

FIG. 6 illustrates a simplified code listing of a markup language document;

FIG. 7 illustrates a simplified method flow chart diagram of a method of the present invention;

FIG. 8 illustrates a more detailed flow chart diagram of the second method step;

FIG. 9 illustrates a more detailed flow chart diagram of a recursive method step.

### Detailed Description of the Invention

For convenience, a list of references is provided prior to the claims. As used herein, when referring to coding, each code line is numbered in parenthesis.

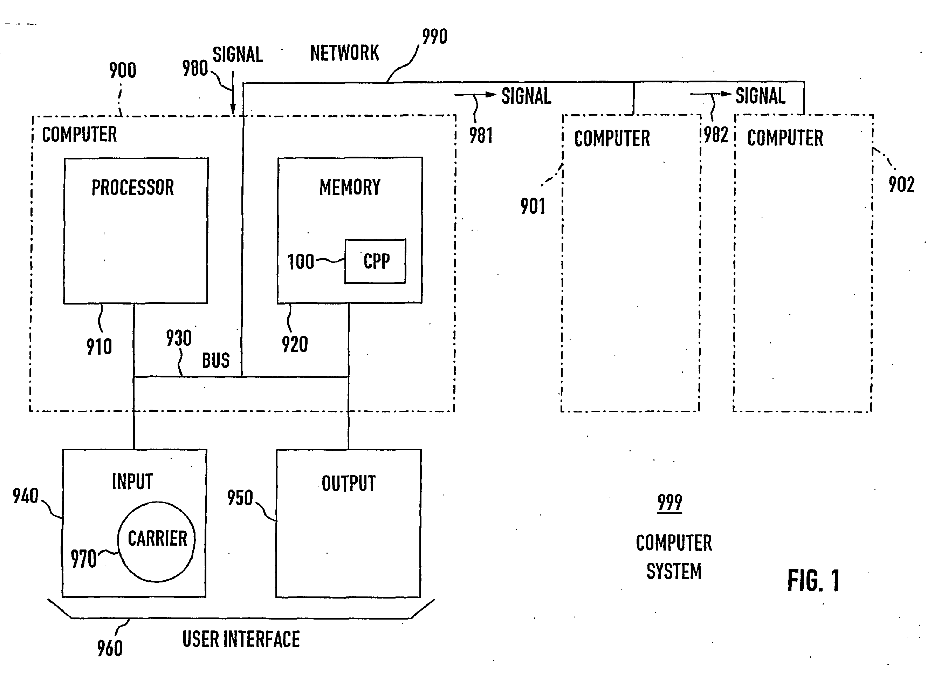

FIG. 1 illustrates a simplified block diagram of computer network system 999 having a plurality of computers 900, 901, 902 (or 90q, with q=0...Q-1, Q any number) .

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

026 Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

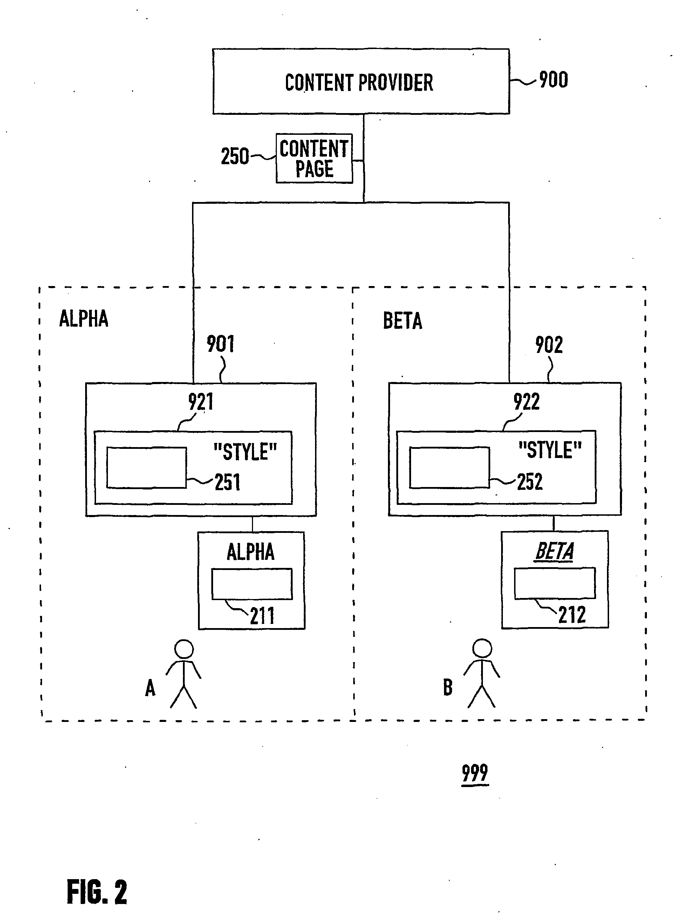

FIG. 2 illustrates a simplified block diagram of network system 999 in that the present invention is applied. User A operates first computer 901; user B operates second computer 902. Each computer 901/902 has a browser that causes display 951/952 to display HTML-pages. Browsers are commercially available and well known in the art.

User A and user B work in different organizations (dashed frames): organization ALPHA uses a first organization presentation layout and organization BETA uses a second presentation layout. As mentioned above, each layout is defined, for example, by color, logo, font, and font size, etc.

For example, in written documents, or in display presentations (e.g. internet homepage), display 951 of computer 901 displays "ALPHA" in plain letters; display 952 of computer 902 displays "BETA" in italics und underlined.

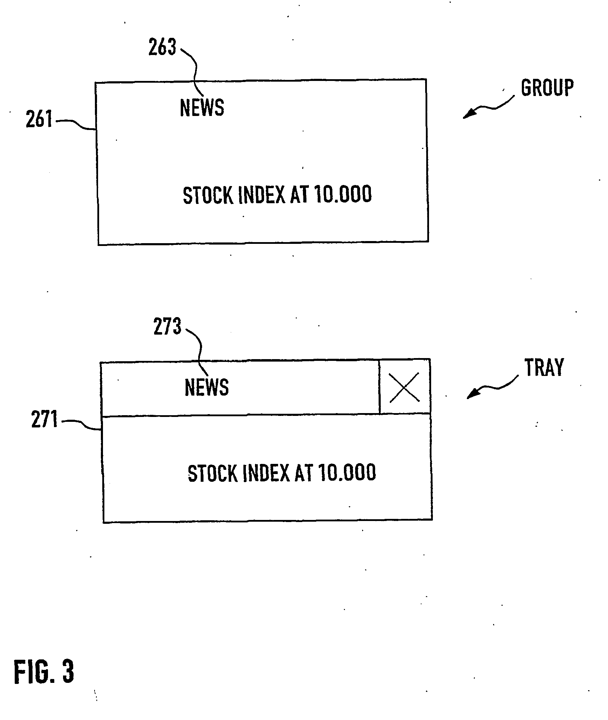

Both computers 901/902 display identical content, for example, business news, weather news, as indicated by content boxes 211, 212 in displays 951 and 952, respectively. As used herein, the exemplary content is "stock index at 10.000". Content boxes are further detailed later. For example, content boxes are implemented by predefined layout items such as "groups" or "trays" (cf. FIGS. 3-4).

Content is provided by content provider computer 900. Computer 900 sends content page 250 to computers 901/902. Illustrating computer 900 as a single computer that sends pages to both computers 901/902 is convenient for explanation, but not necessary for the present invention. Separate content provider computers can be implemented in both ALPHA and BETA organizations. Computer 900 generates page 250 in interaction with a human operator (not shown). Page 250 is provided in HTML. Preferably, page 250 comprises content only; it is understood that content provider computer 900 consecutively provides new and updated content pages.

Layout file 251 is available to computer 901; layout file 252 is available to computer 902. For example, files 251 and 252 are stored in memories 921 and 922 of computers 901 and 902, respectively, or stored elsewhere. Conveniently, layout files 251 and 252 have the same file name, for example, "STYLE". The creation of files 251 and 252 according to the present invention is explained in connection with FIGS. 3-7.

Layout files 251 and 252 both are referenced from page 250. For example, in the header portion of HTML-page 250, layout file "STYLE" is defined as a link in a predefined type (here: CSS-type)
(1) <head>
(2) <link href="style" type="css">
(3) </head>

The type CSS ("cascading style sheet") is a predefined type that contains formatting and layout information. CSS is defined by the World Wide Web Consortium (W3C, "www.w3.org/") in the following specifications: "Cascading Style Sheets, level 1, W3C Recommendation, 17 Dec 1996, revised 11 Jan 1999" and "Cascading Style Sheets, level 2, W3C Recommendation, 12 May 1998".

Sharing the file name "STYLE" for files 251 and 252 does not create a conflict between computers 901 and 902 because different computers 901/902 in different organizations ALPHA and BETA use different file location domains and paths. Hence, both assignments of file 251 to computer 901 and of file 252 to computer 902 are unique.

The body portion of page comprises the actual content; that is:
(4) <body>
(5) <div>
(6) <div class="GroupTitle">News</div>
(7) <div class="GroupBody"> Stock Index today at 10.000</div> (8) </div>
(9) </body>

The tag "div" in line (6) points to a class (here called "GroupTitle") that is defined in files 251 and 252. According to the present invention, when content page 250 is displayed in computer 901 then the class "GroupTitle" is taken from file 251; when content page 250 is displayed in computer 902 then the class "GroupTitle" is taken from file 252.

In the example, the title ("News") is displayed in a predefined layout item "groups". In the alternative, with modified coding in page 250, the title is displayed in the layout item "tray". Examples for "group" and "tray" are illustrated in connection with FIGS. 3-4.

For the following discussion how class "GroupTitle" is defined in files 251/252, only layout file 251 discussed; layout file 252 is provided in a similar manner or is provided traditionally as known in the art.

FIG. 3 illustrates group 261 and tray 271 each with title 263 and 273, respectively ("NEWS"), in organization ALPHA on computer 901.

It is desired to display titles 263 and 273 in plain text ("NEWS"). Group 261 and tray 271 are examples for a type of display items.

FIG. 3 also shows content ("STOCK...") ; the choice whether to display group or tray depends on the entry in content page 250 (lines 6,7, group). Tray and group distinguish by their visual appearance; 271 has a close button (right upper corner).

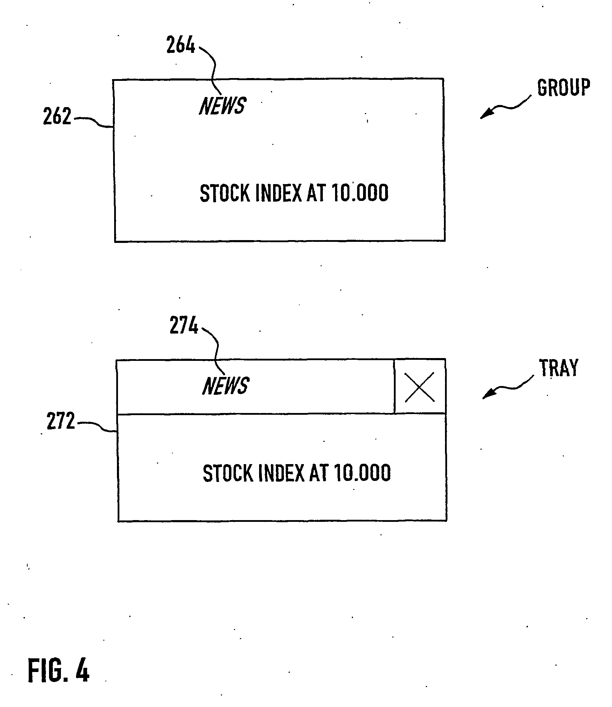

FIG. 4 illustrates group 262 and tray 272 each with title 264 and 274, respectively ("NEWS") in organization BETA on computer 902. It is desired to write titles 264 and 274 in underlined italics text *("NEWS").* Group 262 and tray 272 are examples for a type of display items. FIG. 4 also shows content ("STOCK..."); again, the choice whether to display group or tray depends on the entry in content page 250 (lines 6,7, "group").

The following explains how layout files 251 and 252 are coded. Preferably, file 251 has the following coding:
(1) GroupTitle {
(2) font-family: Arial;
(3) font-style: normal;
(4) }
(5) TrayTitle {
(6) font-family: Arial;
(7) font-style: normal;
(8) }

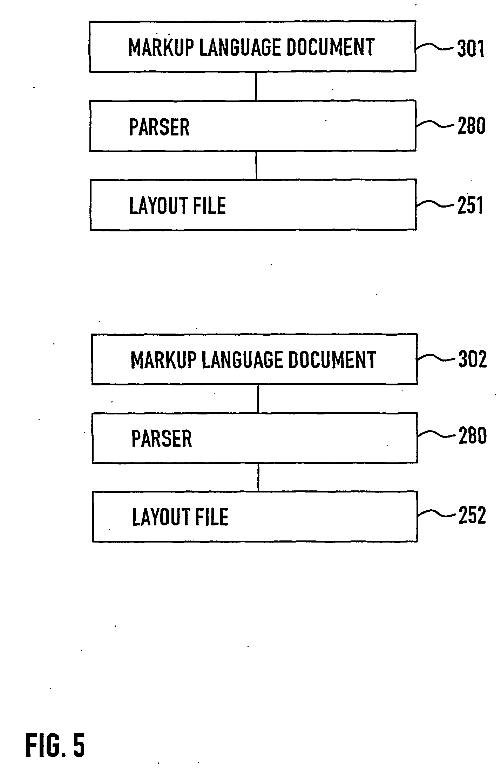

That means that the browser is instructed to show titles 263/273 in both groups 261 and 271 by normal Arial font; it is an advantage of the present invention that the layout definitions is written into lines (2),(3),(6), and (7) of file 251 by a single markup language document 301 (FIGS. 5-7).

Similar rules apply for the coding of file 252, that is:
(1) GroupTitle {
(2) font-family: Arial;
(3) font-style: italics, underline;
(4) }
(5) TrayTitle {
(6) font-family: Arial;
(7) font-style: italics, underline;
(8) }

That means that the browser is instructed to show titles 264/274 in both group 262 and 272 by italics underlined Arial font; it is an advantage of the present invention that these layout definitions in written into file 252 by single document 302.

In other words, layout files 251 and 252 each have pluralities of layout classes, each class for a type of display items, for example "group" and "tray".

FIG. 5 illustrates simplified block diagrams of a markup language document, a parser, and a layout file according to the present invention. For customizing the layout for ALPHA, parser 280 reads document 301 and provides file 251; similarly, for customizing the layout for BETA, parser 280 reads document 302 and provides file 252. It is an advantage that for adapting files 251 and 252 to organization layouts, all classes (e.g. for groups and trays) are adapted.

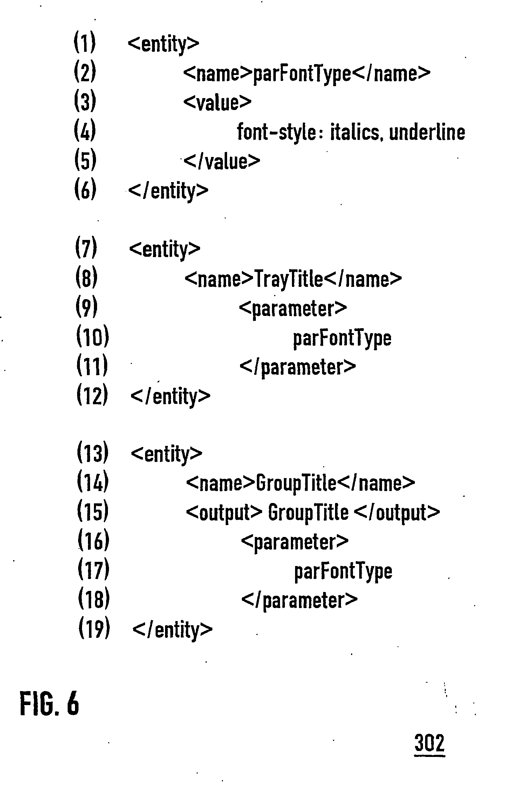

FIG. 6 illustrates a simplified code listing of markup language document 302 (BETA). Markup language document 302 is written in XML. Entities are defined for a first entity (lines 1-6), a second entity (lines 7-12), a third entity (lines 13-19).

Line (2) ("parFontType") introduces a single parameter that is used to define the title layout (cf. titles 264, 274 in FIG. 4). The value of the parameter is "italics, underline", cf. line (10). Lines (14)-(15) indicate that actually file 252 is created (GroupTitle). For convenience, further definitions (e.g., of Arial as the font) are not illustrated.

The explanation for document 302 is also valid for document 301. For organization ALPHA, document 301, line (17), would read "normal", parser 280 would read 301 and would provide 251 ("STYLE"), cf. FIG. 5. It is an advantage that only a single parameter (i.e. in line 17) has to be changed. For convenience of explanation, document 301/302 is written for a single-pass parser, so that the parameter defining entity (i.e. lines 1-6) comes first; persons of skill in the art can also write document 301/302 for a multi-pass parser with a modified entity order.

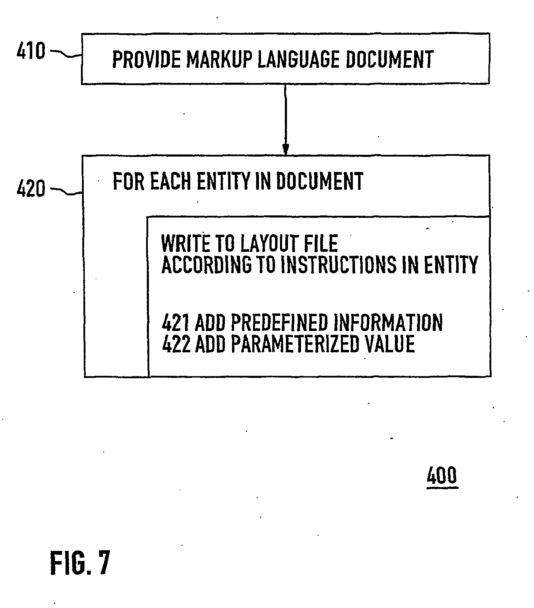

FIG. 7 illustrates a simplified method flow chart diagram of a method of the present invention. Method 400 for providing layout file 251/252 that determines the visual layout (cf. FIG. 1, on display 951/952) of a browser presentation of content page 250 comprises the steps providing 410 markup language document 301/302, and executing 420 instructions to add 421 predefined information and to add 422 a parameterized value.

In step providing 410, document 301/302 is provided with a plurality of entities, cf. FIG. 6, lines 1-6, lines 7-12, and lines 13-19. Some or all entities have instructions (e.g., line 15, instruction "output") to define portions of layout file 251/252, for example, in lines 1, 3, 6, 7 of file 251/252.

In step executing 420 the instructions for each entity (e.g., 1-6, 7-12, 13-19 of document 302) of markup language document 301/302, parser 280 adds 421 to layout file 251/252 predefined information (e.g., "GroupTitle", line 15) of the instruction and adds 422 a parameterized value (e.g., "italics, underline", line 4) of the instruction. The parameterized value is valid for at least a first entity (e.g. lines 7-12) and a second entity (e.g., lines 13-19) of the plurality of entities of document 301/302. In step providing 410, markup language document 301/302 is provided in XML.

Performing method 400 in content provider computer 900 is convenient, but not necessary for the present invention. Method 400 can be performed on any other standard computer. For simplicity of explanation, performing method 400 in computer 900 is assumed. The present invention is also described as computer program product 100 (CPP) having a plurality of processor commands for causing "first" computer 900 to provide layout file 251/252. As explained above, layout file 251/252 determines the visual layout of a browser presentation (for example, on display 951/952) of content page 250 in "second" computer 901/902. The plurality of processor commands cause computer 900 to: p
rovide (cf. step 410) markup language document 301/302 with a plurality of entities (for example 1-6, 7-12, 13-19) in that instructions define portions of the layout file (e.g., instruction "output"),
execute (cf. step 420) the instructions for each entity of the markup language document, wherein predefined information of the instruction is added (cf. step 421) to layout file 251/252, wherein a parameterized value of the instruction is added to layout file 251/252. The parameterized value is valid for at least a first entity (e.g., on lines 7-12) and a second entity (e.g., on lines 13-19) of the plurality of entities.

In other words, the present invention applied to computer system 999 is summarized as follows: Displayed is content page 250 on first computer 901 and on second computer 902, content page 250 is provided by content provider computer 900; first computer 901 displays content page 250 according to a first layout defined in first layout file 251, and second computer 902 displays content page 250 according to a second layout defined in second layout file 252. First layout file 251 and second layout file 252 each are provided by parser 280 that reads first markup language document 301 and second markup language document 302, respectively. Each markup language document 301/302 has a first entity 7-12 and a second entity 13-19 in that instructions define portions of the respective layout file 251/252 by predefined information added 421 to the respective layout file 251/252 and by parameterized values also added to the respective layout file 251/252. The parameterized values are valid for both the first entity 7-12 and the second entity 13-19. Validity in both entities ensures that display items are unique for each layout file.

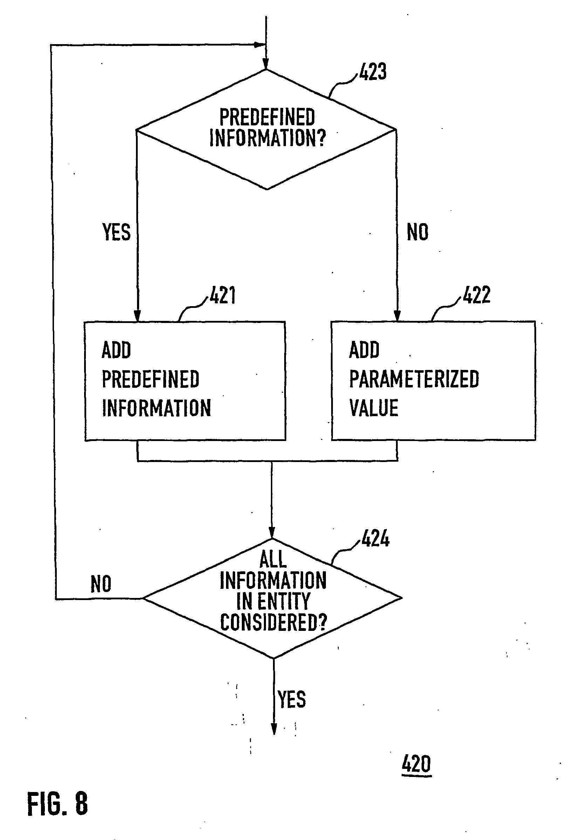

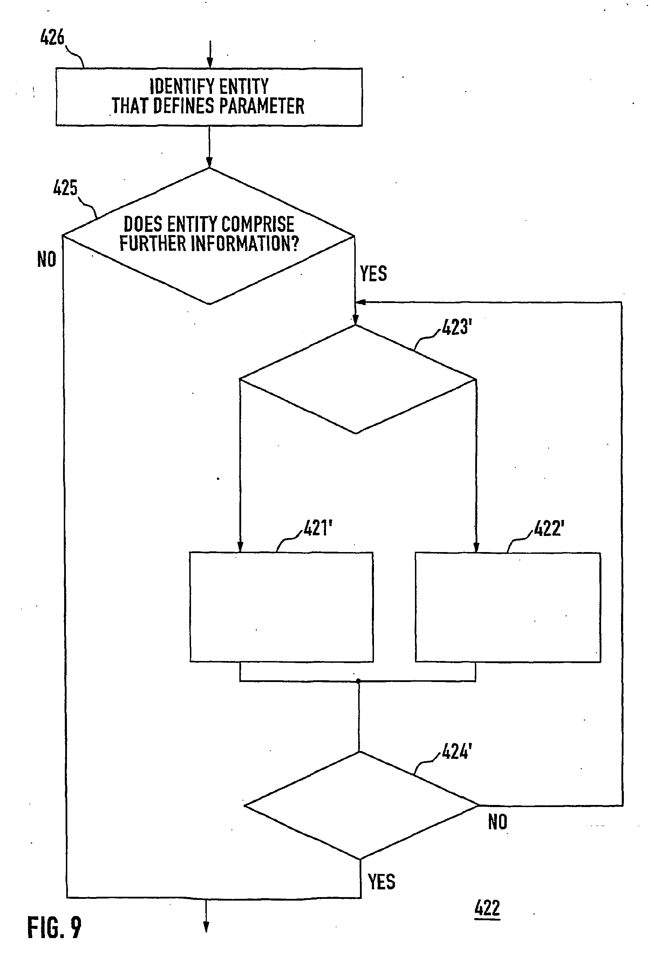

FIG. 8 illustrates a more detailed flow chart diagram of second method step 420. First, sub-step 423, parser 280 checks the existence of predefined information in the entity (YES/NO). In the example of document 302 in FIG. 6, predefined information is the information identified by the tags <value> and <output>. Predefined information is: "font-style: italics, underline" in entity 1-6 and "GroupTitle" in entity 13-19. Second, if predefined information is existent (YES), parser 280 adds the predefined information to layout file 251/252 in sub-step 421; otherwise (NO) parser adds the parameterized value as in step 422 (details in FIG. 9). Step 420 continues with a conditional repetition of sub-steps 421/422 for further information (query 424).

FIG. 9 illustrates a more detailed flow chart diagram of method step 422. As mentioned, step 422 adds the parameterized value. Step 422 is - optionally - recursive: in FIG. 9, prime-marked sub-steps 421', 422', 423', 424' correspond to the sub-steps in FIG. 8. In step 426, parser 280 identifies the entry that defines the parameter. For example, step 420 is called for entity 13-19 of document 302 (parameter "parFontType"); sub-step 426 identifies entity 1-6 as defining "parFontType". If the identified entity (e.g., 1-6) comprises further information (query 425 YES), parser 280 executes steps 423', 421', 422' and 424' as described in connection with FIG. 8. For example, the further information in entity 1-6 is the font-style definition in line 4 that is written (add 421') to layout file 252.

### List of References

- 100: CPP
- 1-6, 7-12, 13-19: entities
- 211/212: content boxes
- 250: content page
- 251: layout file
- 252: layout file
- 261: group (for ALPHA)
- 262: group (for BETA)
- 263/273: title (for ALPHA)
- 264/274: title (for BETA)
- 271: tray (for ALPHA)
- 272: tray (for BETA)
- 280: parser
- 301/302: markup language document
- 400: method
- 410: providing
- 420: executing instruction
- 421/422: adding
- 900: content provider computer
- 901: first computer, ALPHA
- 902: second computer, BETA
- 910: processor
- 920/921/922: memory
- 940: input
- 950/951/952: output (display)
- 960: user interface
- 970: carrier
- 981/982: signal
- 990: network
- 999: computer system

## Claims

1. Computer-implemented method (400) for providing a first layout file (251) in a cascading style sheet type available to a first computer (901) and a second layout file in a cascading style sheet type available to a second computer (902), the first and second layout files (251, 252) having the same file name and determining a visual layout of a browser presentation of a content page in HTML (250), each of the first and second layout files having a plurality of layout classes, each layout class for a type of display items, the content page (250) being sent by a content provider computer (900) to the first and second computers (901, 902) displaying identical content, the content page (250) comprising at least one tag pointing to a layout class that is defined in the first and second layout files (251, 252), the method (400) comprising the following steps:
providing a first markup language document (301) written in XML by a person of skill in the art and a second markup language document (302) written XML by a person of skill in the art, the first and second markup language documents (301, 302) having a plurality of entities (1-6, 7-12, 13-19) some or all of the entities having, output tags interpreted as instructions defining portions of the respective first and second layout files (251, 252),
for each entity of the first and second markup language documents (301, 302) executing (420), by a parser (280), the respective instructions to define portions of the respective first and second layout files (251, 252), including performing the steps of:
- checking (423) the existence of predefined information in the entity (1-6, 7-12, 13-19), wherein the predefined information is identified by value or output tags in the first and second markup language documents (301, 302);
- if the predefined information is existent, adding (421) the predefined information to the respective first and second layout files (251, 252);
- if the predefined information is not existent, adding (422) a parameterized value to the first and second layout files (251, 252), wherein adding (422) includes the steps of:
-- identifying (426) an entity (1-6) of the plurality of entities (1-6, 7-12, 13-19) that defines a parameter,
-- executing, if the identified entity (1-6) comprises further information, the steps of checking (423'), adding (421'), and adding (422') for the further information corresponding to the predefined information in the identified entity (1-6),
-- continuing (424') with a conditional repetition of the steps adding (421') and adding (422') until all informations in the entity is considered
wherein the parameterized value is valid for at least a first entity (7-12) and a second entity (13-19) of the plurality of entities (1-6, 7-12, 13-19);
- continuing (424) with a conditional repetition of the steps adding (421) and adding (422) until all information in the entity (1-6, 7-12, 13-19) is considered; and
wherein the content page (250) references both, the first and second layout files (251, 252) by defining a link using the same file name for the first and second layout files (251, 252), wherein, when the content page (250) is displayed in the first computer (901) then the layout class is taken from the first layout file (251), wherein, when the content page (250) is displayed in the second computer (902) then the layout class is taken from the second layout file (252).

2. Computer program product (100) having a plurality of processor commands for causing a content provider computer (900) to provide a first layout file (251) and a second layout file (252), the first and second layout files (251, 252) having the same file name and determining a visual layout of a browser presentation of a content page (250) in a first computer (901) and a second computer (902), each of the first and second layout files having a plurality of layout classes, each layout class for a type of display items, the content page (250) being sent by the content provider computer (900) to the first and second computers (901, 902) displaying identical content, the content page (250) comprising at least one tag pointing to a layout class that is defined in the first and second layout files (251, 252), the plurality of processor commands being adapted to cause the content provider computer (900) to carry out the method according to claim 1.

3. Article of manufacture (970) with computer readable medium having computer readable program code means embodied therein for providing a first layout file (251) and a second layout file (252), the first and second layout files (251, 252) determining a visual layout of a browser presentation of a content page (250), each of the first and second layout files having a plurality of layout classes, each layout class for a type of display items, the content page (250) being sent by a content provider computer (900) to the first and second computers (901, 902) displaying identical content, the content page (250) comprising at least one tag pointing to a layout class that is defined in the first and second layout files (251, 252), the program code means causing the article of manufacture (970) to carry out the method according to claim 1.

4. Computer system (999) for displaying a content page (250) on a first computer (901) and on a second computer (902), the content page (250) being provided by a content provider computer (900);
the first computer (901) displaying the content page (250) according to a first layout defined in a first layout file (251) and the second computer (902) displaying the content page (250) according to a second layout defined in a second layout file (252),
the first layout file (251) and the second layout file (252) each being provided by a parser (280) that reads a first markup language document (301) and a second markup language (302) document respectively,
each markup language document (301, 302) having a first entity (7-12) and a second entity (13-19), each entity having respective instructions to define portions of the respective layout file (251, 252),
the parser (280) being adapted to perform the method according to claim 1.

## Patentansprüche

1. Computerimplementiertes Verfahren (400) zum Bereitstellen einer ersten Layoutdatei (251) in dem Typ eines Cascading Style Sheet, das auf einem ersten Computer (901) verfügbar ist, und einer zweiten Layoutdatei in dem Typ eines Cascading Style Sheet, das auf einem zweiten Computer (902) verfügbar ist, wobei die ersten und zweiten Layoutdateien (251, 252) den gleichen Dateinamen haben und ein visuelles Layout einer Browser-Darstellung einer Inhaltsseite in HTML (250) bestimmen, wobei jede der ersten und zweiten Layoutdateien eine Vielzahl von Layoutklassen hat, wobei jede Layoutklasse für einen Typ von Anzeigegegenständen ist, wobei die Inhaltsseite (250) von einem Computer (900) eines Inhalteanbieters an die ersten und zweiten Computer (901, 902) gesendet wird, welche den identischen Inhalt anzeigen, wobei die Inhaltsseite (250) wenigstens eine Markierung bzw. einen Tag umfasst, der auf eine Layoutklasse zeigt, die in den ersten und zweiten Layoutdateien (251, 252) definiert ist, wobei das Verfahren (400) die folgenden Schritte umfasst:
Bereitstellen eines ersten Auszeichnungssprachen- (Markup Language) Dokuments (301), das von einer Person mit Kenntnissen der Technik in XML geschrieben ist, und eines zweiten Auszeichnungssprachen-Dokuments (302), das von einer Person mit Kenntnissen der Technik in XML geschrieben ist, und wobei das erste und zweite Auszeichnungssprachen-Dokument (301, 302) eine Vielzahl von Einheiten (1 - 6, 7 - 12, 13 - 19) haben, wobei einige oder alle der Einheiten Ausgabetags haben, die als Anweisungen interpretiert werden, die Abschnitte der jeweiligen ersten und zweiten Layoutdateien (251, 252) definieren,
Ausführen (420) der jeweiligen Anweisungen für jede Einheit der ersten und zweiten Auszeichnungssprachen-Dokumente (301, 302) durch einen Syntaxanalysator bzw. Parser (280), um Abschnitte der jeweiligen ersten und zweiten Layoutdateien (251, 252) zu definieren, was die Ausführung der folgenden Schritte umfasst:
- Prüfen (423) des Vorhandenseins von vordefinierten Informationen in der Einheit (1 - 6, 7 - 12, 13 - 19), wobei die vordefinierten Informationen durch einen Wert oder Ausgabetags in dem ersten und zweiten Auszeichnungssprachen-Dokument (301, 302) bestimmt werden;
- wenn die vordefinierten Informationen vorhanden sind, Hinzufügen (421) der vordefinierten Informationen zu den jeweiligen ersten und zweiten Layoutdateien (251, 252);
- wenn die vordefinierten Informationen nicht vorhanden sind, Hinzuführen (422) eines parametrisierten Werts zu den ersten und zweiten Layoutdateien (251, 252), wobei das Hinzufügen (422) die folgenden Schritte umfasst:
- Bestimmen (426) einer Einheit (1 - 6) der Vielzahl von Einheiten (1 - 6, 7 - 12, 13 - 19), die einen Parameter definiert,
- wenn die bestimmte Einheit (1 - 6) weitere Informationen umfasst, Ausführen der Schritte des Prüfens (423'), Hinzufügens (421') und Hinzufügens (422') für die weiteren Informationen, die den vordefinierten Informationen in der bestimmten Einheit (1 - 6) entsprechen,
- Fortsetzen (424') der Schritte des Hinzufügens (421') und Hinzufügens (422') mit einer bedingten Wiederholung, bis alle Informationen in der Einheit berücksichtigt sind,
wobei der parametrisierte Wert wenigstens für eine erste Einheit (7 - 12) und eine zweite Einheit (13 - 19) der Vielzahl von Einheiten (1 - 6, 7 - 12, 13 - 19) gültig ist;
- Fortsetzen (424) der Schritte des Hinzufügens (421) und des Hinzufügens (422) mit einer bedingten Wiederholung, bis alle Informationen in der Einheit (1 - 6, 7 - 12, 13 - 19) berücksichtigt sind; und
wobei die Inhaltsseite (250) sowohl die erste als auch die zweite Layoutdatei (251, 252) referenziert, indem sie eine Verknüpfung unter Verwendung des gleichen Dateinamens für die ersten und zweiten Layoutdateien (251, 252) definiert, wobei, wenn die Inhaltsseite (250) auf dem ersten Computer (901) angezeigt wird, dann die Layoutklasse aus der ersten Layoutdatei (251) genommen wird, wobei, wenn die Inhaltsseite (250) auf dem zweiten Computer (902) angezeigt wird, dann die Layoutklasse aus der zweiten Layoutdatei (252) genommen wird.

2. Computerprogrammprodukt (100) mit einer Vielzahl von Prozessorbefehlen, um zu bewirken, dass ein Computer (900) eines Inhalteanbieters eine erste Layoutdatei (251) und eine zweite Layoutdatei (252) bereitstellt, wobei die ersten und zweiten Layoutdateien (251, 252) den gleichen Dateinamen haben und ein visuelles Layout einer Browser-Darstellung einer Inhaltsseite (250) auf einem ersten Computer (901) und einem zweiten Computer (902) bestimmen, wobei jede der ersten und zweiten Layoutdateien eine Vielzahl von Layoutklassen hat, wobei jede Layoutklasse für einen Typ von Anzeigegegenständen ist, wobei die Inhaltsseite (250) von dem Computer (900) eines Inhalteanbieters an die ersten und zweiten Computer (901, 902) gesendet wird, welche den identischen Inhalt anzeigen, wobei die Inhaltsseite (250) wenigstens einen Tag umfasst, der auf eine Layoutklasse zeigt, die in den ersten und zweiten Layoutdateien (251, 252) definiert ist, wobei die Vielzahl von Prozessorbefehlen geeignet ist, zu bewirken, dass der Computer (900) des Inhalteanbieters das Verfahren nach Anspruch 1 ausführt.

3. Fertigungsartikel (970) mit computerlesbarem Medium mit darin ausgeführten computerlesbaren Programmcodemitteln, um eine erste Layoutdatei (251) und eine zweite Layoutdatei (252) bereitzustellen, wobei die ersten und zweiten Layoutdateien (251, 252) ein visuelles Layout einer Browser-Darstellung einer Inhaltsseite (250) bestimmen, wobei jede der ersten und zweiten Layoutdateien eine Vielzahl von Layoutklassen hat, wobei jede Layoutklasse für einen Typ von Anzeigegegenständen ist, wobei die Inhaltsseite (250) von dem Computer (900) eines Inhalteanbieters an die ersten und zweiten Computer (901, 902) gesendet wird, welche den identischen Inhalt anzeigen, wobei die Inhaltsseite (250) wenigstens einen Tag umfasst, der auf eine Layoutklasse zeigt, die in den ersten und zweiten Layoutdateien (251, 252) definiert ist, wobei die Programmcodemittel bewirken, dass der Fertigungsartikel (970) das Verfahren nach Anspruch 1 ausführt.

4. Computersystem (999) zum Anzeigen einer Inhaltsseite (250) auf einem ersten Computer (901) und auf einem zweiten Computer (902), wobei die Inhaltsseite (250) von einem Computer (900) eines Inhalteanbieters bereitgesellt wird;
wobei der erste Computer (901) die Inhaltsseite (250) gemäß einem ersten Layout anzeigt, das in einer ersten Layoutdatei (251) definiert ist, und der zweite Computer (902) die Inhaltsseite (250) gemäß einem zweiten Layout anzeigt, das in einer zweiten Layoutdatei (252) definiert ist,
wobei die erste Layoutdatei (251)und die zweite Layoutdatei (252) jeweils von einem Parser (280) bereitgestellt werden, der jeweils ein erstes Auszeichnungssprachen-Dokument (301) und ein zweites Auszeichnungssprachen-Dokument (302) liest,
wobei jedes Auszeichnungssprachen-Dokument (301, 302) eine erste Einheit (7 - 12) und eine zweite Einheit (13 - 19) hat, wobei jede Einheit jeweilige Anweisungen hat, um Abschnitte der jeweiligen Layoutdatei (251, 252) zu definieren,
wobei der Parser (280) geeignet ist, das Verfahren nach Anspruch 1 durchzuführen.

## Revendications

1. Procédé mis en oeuvre par ordinateur (400) pour fournir un premier fichier de mise en page (251) dans un type de feuille de style en cascade disponible à un premier ordinateur (901) et un second fichier de mise en page dans un type de feuille de style en cascade disponible à un second ordinateur (902), les premier et second fichiers de mise en page (251, 252) ayant le même nom de fichier et déterminant une mise en page visuelle d'une présentation de navigateur d'une page de contenu en HTML (250), chacun des premier et second fichiers de mise en page ayant une pluralité de classes de mise en page, chaque classe de mise en page étant destinée à un type d'articles d'affichage, la page de contenu (250) étant envoyée par un ordinateur fournisseur de contenu (900) aux premier et second ordinateurs (901, 902) affichant du contenu identique, la page de contenu (250) comprenant au moins une balise dirigée vers une classe de mise en page qui est définie dans les premier et second fichiers de mise en page (251, 252), le procédé (400) comprenant les étapes suivantes :
fournir un premier document de langage de balisage (301) écrit en XML par une personne de l'art et un second document de langage de balisage (302) écrit en XML par une personne de l'art, les premier et second documents de langage de balisage (301, 302) ayant une pluralité d'entités (1 à 6, 7 à 12, 13 à 19), certaines ou l'ensemble des entités ayant des balises de sortie interprétées comme des instructions définissant des portions des premier et second fichiers de mise en page respectifs (251, 252),
pour chaque entité des premier et second documents de langage de balisage (301, 302), exécuter (420) par un analyseur syntaxique (280) les instructions respectives pour définir des portions des premier et second fichiers de mise en page respectifs (251, 252), y compris réaliser les étapes consistant à :
- vérifier (423) l'existence d'informations prédéfinies dans l'entité (1 à 6, 7 à 12, 13 à 19), dans lequel les informations prédéfinies sont identifiées par des balises de valeur ou de sortie dans les premier et second documents de langage de balisage (301, 302) ;
- si les informations prédéfinies sont existantes, ajouter (421) les informations prédéfinies aux premier et second fichiers de mise en page respectifs (251, 252) ;
- si les informations prédéfinies ne sont pas existantes, ajouter (422) une valeur paramétrée aux premier et second fichiers de mise en page (251, 252), dans lequel l'ajout (422) inclut les étapes consistant à :
-- identifier (426) une entité (1 à 6) de la pluralité d'entités (1 à 6, 7 à 12, 13 à 19) qui définit un paramètre,
-- exécuter les étapes de vérification (423'), d'ajout (421') et d'ajout (422') pour les informations supplémentaires correspondant aux informations prédéfinies dans l'entité identifiée (1 à 6) si l'entité identifiée (1 à 6) comprend des informations supplémentaires,
-- continuer (424') avec une répétition conditionnelle des étapes d'ajout (421') et d'ajout (422') jusqu'à ce que l'ensemble des informations dans l'entité soient prises en compte,
dans lequel la valeur paramétrée est valable pour au moins une première entité (7 à 12) et une seconde entité (13 à 19) de la pluralité d'entités (1 à 6, 7 à 12, 13 à 19);
- continuer (424) avec une répétition conditionnelle des étapes d'ajout (421) et d'ajout (422) jusqu'à ce que l'ensemble des informations dans l'entité (1 à 6, 7 à 12, 13 à 19) soient prises en compte ; et
dans lequel la page de contenu (250) référence à la fois les premier et second fichiers de mise en page (251, 252) en définissant un lien utilisant le même nom de fichier pour les premier et second fichiers de mise en page (251, 252), dans lequel, lorsque la page de contenu (250) est affichée dans le premier ordinateur (901), alors la classe de mise en page est prélevée du premier fichier de mise en page (251), dans lequel, lorsque la page de contenu (250) est affichée dans le second ordinateur (902), alors la classe de mise en page est prélevée du second fichier de mise en page (252).

2. Produit de programme informatique (100) ayant une pluralité de commandes de processeur pour pousser un ordinateur fournisseur de contenu (900) à fournir un premier fichier de mise en page (251) et un second fichier de mise en page (252), les premier et second fichiers de mise en page (251, 252) ayant le même nom de fichier et déterminant une mise en page visuelle d'une présentation de navigateur d'une page de contenu (250) dans un premier ordinateur (901) et un second ordinateur (902), chacun des premier et second fichiers de mise en page ayant une pluralité de classes de mise en page, chaque classe de mise en page étant destinée à un type d'articles d'affichage, la page de contenu (250) étant envoyée par l'ordinateur fournisseur de contenu (900) aux premier et second ordinateurs (901, 902) affichant du contenu identique, la page de contenu (250) comprenant au moins une balise dirigée vers une classe de mise en page qui est définie dans les premier et second fichiers de mise en page (251, 252), la pluralité de commandes de processeur étant adaptée à pousser l'ordinateur fournisseur de contenu (900) à réaliser le procédé selon la revendication 1.

3. Article de fabrication (970) avec un support lisible par ordinateur ayant un moyen de code de programme lisible par ordinateur mis en oeuvre en son sein pour fournir un premier fichier de mise en page (251) et un second fichier de mise en page (252), les premier et second fichiers de mise en page (251, 252) déterminant une mise en page visuelle d'une présentation de navigateur d'une page de contenu (250), chacun des premier et second fichiers de mise en page ayant une pluralité de classes de mise en page, chaque classe de mise en page étant destinée à un type d'articles d'affichage, la page de contenu (250) étant envoyée par un ordinateur fournisseur de contenu (900) aux premier et second ordinateurs (901, 902) affichant du contenu identique, la page de contenu (250) comprenant au moins une balise dirigée vers une classe de mise en page qui est définie dans les premier et second fichiers de mise en page (251, 252), le moyen de code de programme poussant l'article de fabrication (970) à réaliser le procédé selon la revendication 1.

4. Système informatique (999) pour afficher une page de contenu (250) sur un premier ordinateur (901) et sur un second ordinateur (902), la page de contenu (250) étant fournie par un ordinateur fournisseur de contenu (900) ;
le premier ordinateur (901) affichant la page de contenu (250) en fonction d'une première mise en page définie dans un premier fichier de mise en page (251) et le second ordinateur (902) affichant la page de contenu (250) en fonction d'une seconde mise en page définie dans un second fichier de mise en page (252),
le premier fichier de mise en page (251 ) et le second fichier de mise en page (252) étant chacun pourvus d'un analyseur syntaxique (280) qui lit un premier document de langage de balisage (301) et un second document de langage de balisage (302) respectivement,
chaque document de langage de balisage (301, 302) ayant une première entité (7 à 12) et une seconde entité (13 à 19), chaque entité ayant des instructions respectives pour définir des portions du fichier de mise en page respectif (251, 252),
l'analyseur syntaxique (280) étant adapté à réaliser le procédé selon la revendication 1.
